Europäisches Patentamt

European Patent Office

Office européen des brevets

(11) Publication number: **0 259 996**
**A1**

## EUROPEAN PATENT APPLICATION

(21) Application number: **87307357.1**

(51) Int. Cl.4: **A23L 1/236**

(22) Date of filing: **20.08.87**

(30) Priority: **21.08.86 US 898963**

(43) Date of publication of application:
**16.03.88 Bulletin 88/11**

(84) Designated Contracting States:
**AT BE CH DE ES FR GB GR IT LI LU NL SE**

(71) Applicant: **SUOMEN SOKERI OY**
**Lansituulentie 7**
**SF-02101 Espoo 10(FI)**

(72) Inventor: **Olinger, Philip M.**
**805 Lexington Avenue**
**St. Charles Illinois 60174(US)**
Inventor: **Kradle, Alene F.**
**2023 Chicago Avenue**
**Savanna Illinois 61074(US)**

(74) Representative: **Jones, Ian et al**
**POLLAK MERCER & TENCH High Holborn**
**House 52-54 High Holborn**
**London WC1V 6RY(GB)**

(54) **Sweetening composition.**

(57) A sweetening composition comprises a dipeptide sweetener, preferably aspartame, and a sweetness enhancing mixture of a physiologically acceptable polyhydric alcohol, preferably fructose, and a physiologically acceptable polycarboxylic acid having two or more dissociation constants, with a pKa value less than about 5.5 preferably citric acid.

EP 0 259 996 A1

## SWEETENING COMPOSITION

This invention relates to a sweetening composition which comprises a dipeptide sweetener.

Dipeptide sweeteners, such as the L-aspartic acid derivatives, have received wide acceptance in many applications as an intense sweetener and sugar substitute. These dipeptide sweeteners are characterized by their intense sweetness and their clear initial sweet taste with a lack of any perceived unpleasant or objectionable aftertaste.

The dipeptide sweetener of choice is aspartame (1-methyl-N-L-α-aspartyl-L-phenylalanine). Aspartame has been successfully used as a sweetener in a number of different applications - liquids, desserts, chewing gum - with no unpleasant or objectionable aftertaste. However, the use of aspartame has been heretofore limited to cold applications or brief moderately heated applications because of the instability of aspartame under elevated temperatures. When subjected to heat, aspartame may hydrolyze to the dipeptide aspartyl phenylalanine (AP) or be converted to diketopiperazine (DKP). DKP can further convert to AP and ultimately the AP converts into its constituent amino acids. AP, DKP and the amino acids produced upon decomposition are not sweet; therefore, the breakdown and/or conversion products of aspartame result in the loss of perceived sweetness.

For these reasons, aspartame has not - to date - been successfully used in applications where a relatively low calorie food product has to be heated, such as baked products. However, aspartame would be an attractive sweetener in these contexts, particularly in dietetic products which contain low or reduced calories. Other artificial sweeteners, e.g. sodium saccharin and calcium saccharin have been used in baked products thereby reducing caloric content, but these sweeteners produce unpleasant aftertastes.

The prior art discloses examples of attempts to stabilize aspartame under elevated temperatures. Colliopoulas, et al., in European patent application 83109544.6 discloses an allegedly heat stable sweetening composition consisting of a dipeptide sweetener and a polyglucose or a polymaltose. Although Colliopoulas et al. reports the increased stability of aspartame in baked applications, it does not refer to the eating quality of such products or to the calorie content, which are computed to be approximately 275 calories/100 g. cake or greater - not a reduced calorie cake.

Vaccarro, in U.S. Patent No. 4,536,410, discloses a dipeptide sweetener composition which is allegedly heat stable. In Vaccarro, aspartame is combined with a lipid - by alternatively heating and cooling the mixture - to form a gel which is alleged to be thermally irreversible. Although Vaccarro reports, in Example 17, that a reduced calorie cake mix was produced using this gel, overall eating quality of the cake was not discussed. In addition, Example 17 discloses a cake which does not have low sodium or cholesterol levels.

Sorge et al. in U.S. Patent No. 4,544,167 disclose a method for agglomerating a comestible mix of aspartame and a food acid at temperatures that are below baking temperatures, i.e. at temperatures of about 140° - 200°F. Sorge et al., does not, however, show or suggest the presently claimed compositions, or their contemplated use in baked products.

The present invention, however, provides a composition and method well suited for utilizing a dipeptide sweetener, such as aspartame, in a heated environment. In particular, using these compositions and methods, one can produce dietetic baked products, e.g., a dietetic cake, with acceptable taste, eating quality, sweetness, low or reduced caloric content, and low and reduced sodium and cholesterol levels.

The present invention provides an intense sweetening composition that includes a dipeptide sweetener together with a sweetness enhancing admixture of a physiologically acceptable polyhydric alcohol and a physiologically acceptable polycarboxylic acid having two or more dissociation constants. The dipeptide sweetener of choice is aspartame. The polycarboxylic acids of choice include citric acid, malic acid, adipic acid, fumaric acid, tartaric acid and glutaric acid. Citric acid is particularly preferred.

The polyhydric alcohol - in the context of the baked products of the present invention - not only provides sweetness synergism in combination with the polycarboxylic acid and contributes significantly to the textural quality of the dipeptide sweetened baked good, but also performs independent sweetening, bulking, softening and flavoring functions. The polyhydric alcohol of choice is fructose, preferably in crystalline form.

The polycarboxylic acid in the foregoing context also contributes significantly, together with the polyhydric alcohol, to the observed sweetness synergism of the dipeptide sweetened baked goods. Further the polycarboxylic acid performs a leavening function as the acidulant portion of a single action leavening system which includes potassium bicarbonate as the carbon dioxide source, thereby providing a no sodium added product.

The use of the present sweetening compositions in baked products has resulted in a significant sweetness synergism, i.e., the baked product demonstrates greater perceived sweetness than expected based on the amount of the dipeptide sweetener and polyhyric alcohol present. Our observations further suggest that the sweetening composition of the invention may impart a heat stabilizing influence on the dipeptide sweetener as well as compensating for any sweetness which may be lose due to possible breakdown of the dipeptide sweetener during the baking process.

The present invention also provides a mix for food products which can have reduced or low caloric content, as well as acceptable taste, sweetness and overall eating quality. These mixes include a dipeptide sweetener and a sweetness enhancing admixture of a polycarboxylic acid having two or more dissociation constants in combination with a polyhydric alcohol such as fructose (which serves other functions including bulking, softening, etc. and contributes to the sweetness synergism), flour and commercial bulking agents. The polycarboxylic acid is preferably a component of a single action leavening system which also includes an alkaline bicarbonate component, preferably potassium bicarbonate.

In addition, the present invention provides a food product mix sweetened with the compositions described above and also containing egg white solids. Adjusting the amount of egg white solids significantly improves the eating quality of the baked product.

These food product mixes are further characterized as having low sodium and cholesterol levels.

In a method aspect, the present invention provides a means for imparting a synergistic sweetening effect with a dipeptide sweetener by combining said sweetener with a sweetness enhancing admixture of a polyhydric alcohol and a polycarboxylic acid with two or more dissociation constants. This method may also impart a sweetener sparing effect in that the breakdown of the dipeptide sweetener during the baking process is thought to be reduced.

In a further method aspect, the present invention provides for a means of making a low or reduced caloric baked product which has low sodium and cholesterol levels.

The invention will be further understood from the following general and experimental description.

## A. General

The principal ingredients of the present sweetness enhanced, dipeptide sweetener sparing sweetening composition are a dipeptide sweetener, a physiologically acceptable polyhydric alcohol and a physiologically acceptable polycarboxylic acid having two dissociation constants with pKa values of less than about 5.5. Preferably the weight ratio of the polycarboxylic acid to the dipeptide sweetener is less than about 7, the weight ratio of the dipeptide sweetener to the polyhydric alcohol is about 0.006 to about 0.008, and the weight ratio of polycarboxylic acid to polyhydric alcohol is about 0.016 to about 0.04. Such sweetening compositions are particularly well suited for use in food products that are subjected to elevated temperatures.

Among the dipeptide sweeteners contemplated for the present compositions are the L-aspartic acid derivatives of the type disclosed in U.S. Patent No. 3,475,403 (Mazur et al.); U.S. Patent No. 3,492,132 (Schlatter); U.S. Patent No. 4,029,701 (Haas et al.); U.S. Patent No. 4,517,214 (Shoaf et al.); and U.S. Patent No. 4,554,167 (Sorge et al.). The preferred dipeptide sweeteners for the present purposes are the aspartyl phenylalanine alkyl esters containing up to four carbon atoms, inclusive, in the alkyl moiety thereof. The dipeptide sweetener which is particularly preferred is aspartame (1-methyl-N-L-α-aspartyl-L-phenylalanine).

Illustrative of the polycarboxylic acids suitable as constituents of the present compositions are the acyclic polycarboxylic acids such as the hydroxypolycarboxylic acids and the aliphatic polycarboxylic acids whereby the maximum pKa is less than about 5.5

Hydroxypolycarboxylic acids suitable for the present purposes are the hydroxydicarboxylic acids such as malic acid, tartaric acid, and the like, as well as the hydroxytricarboxylic acids such as citric acid and the like.

Aliphatic polycarboxylic acids suitable for the present purposes include the unsaturated aliphatic dicarboxylic acids such as fumaric acid, and the like, as well as the saturated aliphatic dicarboxylic acids containing more than four carbon atoms such as glutaric acid, adipic acid, and the like. Saturated aliphatic dicarboxylic acids containing four carbon atoms or less, e.g., malonic acid and succinic acid, are not suitable as will be demonstrated hereinbelow.

The pKa values of the aforementioned polycarboxylic acids are set forth in Table I, below:

3

# 0 259 996

TABLE I

Dissociation Constants of Polycarboxylic Acids
in Aqueous Solution[1]

| Acid | Temp. °C. | Step | pKa Value |
|---|---|---|---|
| Adipic | 25 | 1 | 4.43 |
| | | 2 | 4.41 |
| Citric | 18 | 1 | 3.14 |
| | | 2 | 4.77 |
| | | 3 | 5.19* |
| Fumaric (trans) | 18 | 1 | 3.03 |
| | | 2 | 4.44 |
| Glutaric | 25 | 1 | 4.34 |
| | | 2 | 5.41 |
| Malic | 25 | 1 | 3.40 |
| | | 2 | 5.11 |
| Malonic | 25 | 1 | 2.83 |
| | | 2 | 5.69 |
| Succinic | 25 | 1 | 4.16 |
| | | 2 | 5.69 |
| -Tartaric | 25 | 1 | 2.98 |
| | | 2 | 4.34 |

-----------------
[1]From, Weast, _Handbook of Chemistry and Physics_, 5th ed, CRC
Press, Cleveland, Ohio (1973), pp. D-129 to D-130.

*Weast incorrectly lists the third dissociation constant of
citric acid as 6.39.

The aforementioned suitable acids when used in food products can also serve as the acidic component of a single action leavening system used in baked products. The leavening system consists of a balanced amount of an alkaline bicarbonate component (a carbon dioxide source) and a weak acid which contributes - in an aqueous solution - to the release of carbon dioxide gas which is essential to the production of a "raised" product, such as a cake. Sodium bicarbonate and potassium bicarbonate are examples of acceptable alkaline bicarbonate components; potassium bicarbonate is particularly wel-suited for purposes of the present invention because it can be used in low sodium or no sodium added contexts.

The compositions of the present invention provide a significant sweetness synergism, i.e. the perceived sweetness of the resulting baked product is noticeably greater than expected based on the amount of sweetener added. These compositions are also thought to spare the loss of sweetness due to retardation, suppression and minimization of the breakdown of dipeptide sweeteners under elevated temperatures.

The physiologically acceptable polyhdric alcohol used as part of the foregoing heat-stabilized compositions also can perform plural functions. Full calorie sweeteners in a baked food product context usually act as bulking and softening agents as well as sweetening agents. Replacement of a full calorie sweetener with an intense sweetener, such as a dipeptide sweetener, results in an increase in the commercial bulking agents present which may result in relatively poor eating quality of the final product. However, it has now been found that a polyhydric alcohol, such as fructose, not only can be utilized as a bulking agent but also that the combination of the sweetness enhancing, dipeptide sweetener sparing sweetening composition of this invention with a polyhydric alcohol also results in a synergistic sweetening effect insofar as the perceived sweetness is greater than expected based on the amount of sweetener added.

Suitable polyhydric alcohols are those having a relative sweetness, as compared to sucrose, of at least 0.3. Illustrative examples are the ketoses such as fructose, as well as sucrose, xylitol, and the like.

The polyhydric alcohol of choice is fructose. Although sucrose is widely used as a natural sweetener, it has many metabolic drawbacks. Consumption of sucrose can produce extreme "highs" and "lows" in blood sugar levels which are considered by many experts to be risk factors in the development of heart disease, arteriosclerosis and hypoglycemia (low blood sugar). Fructose, on the other hand, provides many advantages vis-a-vis sucrose.

4

Fructose is the sweetest natural sugar known. Depending on application temperature, time and pH, fructose can range from approximately 1.0 to approximately 1.7 times sweeter than sucrose, meaning that less fructose may be required to achieve desired sweetness levels, resulting in a corresponding decrease in calories.

Fructose also has many metabolic advantages. For example, fructose enters the bloodstream at a relatively slow rate due to fructose's absorption and metabolization in the liver. In addition, fructose creates 3 to 5 times lower increases in blood sugar and insulin levels than sucrose, dextrose and honey. Moreover, fructose aids in maintaining blood sugar and insulin levels within their normal limits. The consumption of foods that raise blood insulin levels and cause excessive fluctuation in blood sugar may lead to quick return of hunger pangs and to problems with weight control; fructose - because it is released into the blood stream slowly and evenly over an extended period of time - controls hunger naturally.

As noted, in a baking context, the polycarboxylic acid component of the sweetening composition of this invention can function as the acidic component of a single action levening system. Single action leavening systems, in consumer products, result in increased shelf stability vis-a-vis double action systems, because a single action system is not as susceptible to reaction with moisture in the air resulting in deterioration. When potassium bicarbonate is utilized as a component of a single action leavening system, the resulting baked product can have low or reduced sodium levels.

In baked products using organic acids having two or more dissociation constants as the acidic component of the leavening system, the eating quality can be improved by adjusting the amount of egg white solids. This improvement is noted in products sweetened with a dipeptide sweetener/polyhydric alcohol combination, or to a lesser extent a dipeptide sweetener alone.

## B. Experimental

The sweetening compositions of the present invention, in one aspect, provide a low calorie, dietetic cake with the same perceived sweetness as a cake sweetened by full calorie sweeteners. Formulations previously developed for one-third calorie reduced/no sodium added white, yellow, lemon and chocolate cakes sweetened solely with crystalline fructose are set forth in Table II, below and were used for control purposes. The white, yellow and lemon cakes provide about 250 calories per 100 grams of baked cake (chocolate cake 245 calories per 100 g). Each cake was observed to have qualities of good rise, texture, mouthfeel and taste, and the sweetness level of each cake was judged to be acceptable.

## TABLE II

### Cakes Sweetened with Fructose:Low Sodium

| | White | | Yellow | | Lemon | | Chocolate | |
|---|---|---|---|---|---|---|---|---|
| | grams | percent | grams | percent | grams | percent | grams | percent |
| Pure Crystalline Fructose | 222.2 | 47.45 | 223.0 | 47.44 | 223.0 | 47.45 | 215.5 | 44.71 |
| High Ratio Bleached Cake Flour | 182.2 | 38.91 | 182.9 | 38.91 | 182.8 | 38.90 | 181.1 | 37.57 |
| M-Flate (National Starch) | 36.2 | 7.73 | 36.3 | 7.72 | 36.3 | 7.72 | 36.1 | 7.49 |
| Egg White Solids (Henningsen, P-20) | 16.2 | 3.46 | 16.3 | 3.47 | 16.3 | 3.47 | 16.1 | 3.34 |
| Vanilla Powder (Givaudan FD-9993) | 2.7 | 0.58 | 2.7 | 0.57 | 1.0 | 0.21 | 2.7 | 0.56 |
| Potassium Bicarbonate | 2.8 | 0.60 | 2.8 | 0.60 | 2.8 | 0.60 | 4.4 | 0.91 |
| Glucono Delta Lactone (Finnish Sugar) | 6.0 | 1.28 | 6.0 | 1.28 | 6.0 | 1.28 | 4.1 | 0.85 |
| Roche Beta Carotene Beadlets, 10% | ----- | ----- | 0.075 | 0.016 | 0.075 | 0.016 | ----- | ----- |
| Lemon Pentarome (MCP) | ----- | ----- | ----- | ----- | 1.7 | 0.36 | ----- | ----- |
| Cocoa (DeZaan 115B) | ----- | ----- | ----- | ----- | ----- | ----- | 20.0 | 4.15 |
| Potassium Carbonate | ----- | ----- | ----- | ----- | ----- | ----- | 2.0 | 0.41 |
| Water | 312.0 | ----- | 312.0 | ----- | 312.0 | ----- | 312.0 | ----- |
| Theoretical Sweetness Index | 333.3 | ----- | 334.5 | ----- | 334.5 | ----- | 323.25 | ----- |

Directions: Combine dry ingredients. Whip at low speed for 30 seconds. Add water. Continue whipping at low speed for 30 seconds then at high speed for 5 minutes. Transfer batter to lightly greased floured 9 1/2" x 13 1/2" rectangular (or two 9-inch round) cake pan. Bake at 325°F for about 32 minutes (about 28 minutes for round pans).

M-Flate: balanced blend of emulsifiers, modified foodstarch and guar gum

The cakes were extremely low in sodium content because of the absence of added salt and the use of a single action leavening system consisting of glucono delta lactone as the acidulant and potassium bicarbonate. Glucono delta lactone (GDL) is a sugar acid lactone which, as a pro-acid, hydrolyzes upon heating to produce an additional carboxylic acid moiety.

Each of the cakes listed in Table II were sweetened with the polyhydric alochol fructose ($C_6H_{10}O_6$) and had theoretical Sweetness Indices of 333.3 (white), 334.5 (yellow and lemon) and 323.25 (chocolate).

The Sweetness Index is calculated by multiplying the grams of sweetener by the sweetness equivalent of the sweetener (vis-a-vis sucrose). Fructose is one and a half times as sweet as sucrose, so its sweetness equivalent is 1.5.

The white cake in Table II was used as the base point of our research to develop a low calorie cake either sweetened solely by a dipeptide sweetener such as aspartame or sweetened with a combination of fructose and aspartame (with approximately 50 percent of the sweetness being derived from each sweetener). A further goal was to develop a cake, sweetened as noted above, which had a perceived sweetness similar to the white cake in Table II.

For purposes of the present invention, we utilized polycarboxylic acids having two or more dissociation constants as a component of a single action leavening system, rather than a pro-acid such as GDL. Table III, reproduced below, sets forth our results utilizing citric acid and potassium bicarbonate as a single action leavening system, in baked cakes sweetened with aspartame and fructose.

## TABLE III

### Development of Sweetener Levels: Aspartame/Fructose Sweetened White Cake

| | (Grams) | | | | |
|---|---|---|---|---|---|
| | Cake No. 1 | Cake No. 2 | Cake No. 3 | Cake No. 4 | Cake No. 5 |
| Aspartame | 0.96 | 0.60 | 0.50 | 0.40 | 0.35 |
| Pure Crystalline Fructose | 111.5 | 80.0 | 65.0 | 60.0 | 55.0 |
| High Ratio Bleached Cake Flour | 195.0 | 195.0 | 195.0 | 195.0 | 195.0 |
| N-Flate | 38.8 | 38.8 | 38.8 | 38.8 | 38.8 |
| Egg White Solids | 20.3 | 20.3 | 20.3 | 20.3 | 20.3 |
| Potassium Bicarbonate | 2.8 | 2.8 | 2.8 | 2.8 | 2.8 |
| Citric Acid | 1.8 | 1.8 | 1.8 | 1.8 | 1.8 |
| Vanilla Powder | 2.7 | 2.7 | 2.7 | 2.7 | 2.7 |
| Polydextrose | 51.0 | 68.7 | 77.1 | 80.0 | 82.6 |
| Solka Floc | 40.5 | 54.7 | 61.4 | 63.6 | 65.8 |
| Water | 370.0 | 370.0 | 370.0 | 370.0 | 370.0 |
| | | | | | |
| Sweetness: Aspartame x200 | 192 | 120 | 100 | 80 | 70 |
| Sweetness: Fructose x1.5 | 167 | 120 | 98 | 90 | 82 |
| Total Sweetness Index (apparent) | 359 | 240 | 198 | 170 | 152 |
| Perceived Relative Sweetness | (+) | (+) | (+)to I | I | I to(-) |

Key: (+) = hypersweet vs. control; I = isosweet to control; (-) = hyposweet vs. control

N-Flate: balanced blend of emulsifiers, modified foodstarch and guar gum

Solka Floc: powdered cellulose fiber

The white cake in Table II sweetened solely with crystalline fructose, was used as the control: this cake has an Apparent Total Sweetness Index of 333.3. In cake No. 1 (Table III) we attempted to develop a cake sweetened with aspartame and fructose (each contributing approximately 50 percent of the sweetness) with approximately the same Apparent Total Sweetness Index as the control cake. We used 0.96 grams of aspartame and 111.5 grams of fructose calculated as follows: fructose [334 (target index) ÷ 2] ÷ 1.5 [fructose sweetness equivalent] = approximately 111.5 grams; aspartame [334 (target index) ÷ 2] ÷ 200 (aspartame sweetness equivalent) ÷ 0.87 (estimated loss of 13 percent during baking) = approximately 0.96 grams. In order to replace the fructose deleted from the control we added additional bulk by means of polydextrose and powdered cellulose fiber (Solka Floc).

Cake No. 1 was observed to have acceptable taste, rise and mouthfeel, with poor texture (crumbled easily) but was judged to be hypersweet relative to the control. The Apparent Total Sweetness Index (assuming no aspartame loss) of cake No. 1 was 359.

In cake No. 2 we reduced the levels of aspartame (0.60 grams) and fructose (80.0 grams) and increased the bulking agents in order to produce a cake with an Apparent Total Sweetness Index of 240. Cake No. 2 was observed to have acceptable taste, rise and mouthfeel, with poor texture (crumbled easily) but was judged to be hyperswet relative to the control.

In cake No. 3 we reduced the levels of aspartame (0.50 grams) and fructose (65.0 grams) and increased the bulking agents in order to produce a cake with an Apparent Total Sweetness Index of 198. Cake No. 3 was observed to have acceptable taste, rise and mouthfeel, with poor texture (crumbled easily) and was judged to be hypersweet to isosweet relative to the control.

In cake No. 4 we further reduced the levels of aspartame (0.40 grams) and fructose (60.0 grams) and increased the bulking agents in order to produce a cake with an Apparent Total Sweetness Index of 170. Cake No. 4 was observed to have acceptable taste, rise and mouthfeel, with poor texture (crumbled easily) but was judged to be isosweet to the control.

Finally, in cake No. 5, we reduced the levels of aspartame (0.35 grams) and fructose (55.0 grams) and increased the bulking agent to produce a cake with an Apparent Total Sweetness Index of 152. Cake No. 5 was observed to have acceptable taste, rise and mouthfeel, with poor texture (crumbled easily) and was judged to be isosweet to hyposweet relative to the control.

Relative to isosweetness, the applicable weight ratio of aspartame:citric acid based on dry weight is about 0.19 to about 0.3, with a preferred weight ratio of about 0.22.

Relative to isosweetness, the applicable weight ratio of aspartame:fructose is about 0.006 to about 0.008 (preferred ratio about 0.007) based on dry weight, and the applicable ratio of citric acid:fructose is about 0.016 to about 0.033 (preferred ratio about 0.03) based on the dry weight.

The Apparent Total Sweetness Index of cake No. 4 - the cake judged to be isosweet - is calculated to be about 170, one-half the calculated Theoretical Sweetness Index of the control cake. The other cakes were similarly sweeter than expected based on the amount of sweeteners added. The aspartame/fructose sweetening combination together with citric acid, creates a significant (almost two fold in the case of cake No. 4) sweetness synergism in the context of these cakes.

Our further research demonstrates that this synergism exists in cakes which are sweetened solely by aspartame.

Table IV - set forth below - describes a white cake sweetened solely by aspartame with a calculated Apparent Total Sweetness Index of 170. Despite having a Apparent Total Sweetness Index which is one half that of the control (Theoretical Sweetness Index: 334) this cake was judged to be isosweet to the control. This cake has an Apparent Total Sweetness Index equal to Cake No. 4, Table III sweetened with aspartame and fructose, which was also judged isosweet to the control. This suggests that solely aspartame sweetened cakes with Apparent Total Sweetness Indices in the range of about 200 to about 150 will exhibit approximate isosweetness to the control. The applicable weight ratio of aspartame:citric acid based on dry weight with respect to isosweetness is about 0.4 to 0.6, and the preferred ratio is about 0.47.

## TABLE IV

### Development of Sweetener Level: Aspartame
### White Cake

| | grams |
|---|---|
| Aspartame | 0.85 |
| High Ratio Bleached Cake Flour | 199.0 |
| N-Flate | 40.0 |
| Polydextrose | 125.0 |
| Solka Floc | 73.2 |
| Egg White Solids | 20.3 |
| Potassium Bicarbonate | 2.8 |
| Citric Acid | 1.8 |
| Vanilla Powder | 2.7 |
| Water | 350.0 |
| | |
| Total Sweetness Index (apparent), APM x 200 | 170 |
| Perceived Relative Sweetness | Isosweet to Control |

The cake sweetened solely with aspartame exhibited acceptable rise, moderate taste and mouthfeel but extremely poor texture (severe crumbling).

## TABLE V

### Effect of Leavening System on Sweetness

|  | Aspartame/Fructose | | Aspartame | |
|  | Single Action | Double Action | Single Action | Double Action |
|---|---|---|---|---|
| Aspartame | 0.40 | 0.40 | 0.85 | 0.85 |
| Crystalline Fructose | 60.0 | 60.0 | ----- | ----- |
| High Ratio Bleached Cake Flour | 195.0 | 195.0 | 199.0 | 199.0 |
| N-Flate | 38.8 | 38.8 | 40.0 | 40.0 |
| Polydextrose | 80.0 | 80.0 | 125.0 | 125.0 |
| Solka Floc | 63.6 | 63.6 | 73.2 | 73.2 |
| Egg White Solids | 20.3 | 20.3 | 20.3 | 20.3 |
| Vanilla Powder | 2.7 | 2.7 | 2.7 | 2.7 |
| Citric Acid | 1.8 | ----- | 1.8 | ----- |
| Potassium Bicarbonate | 2.8 | ----- | 2.8 | ----- |
| Double Action Baking Powder | ----- | 8.8 | ----- | 8.8 |
| Water | 370.0 | 370.0 | 350.0 | 350.0 |
| Perceived Relative Sweetness | I | (-) | I | (-) |
| Batter pH | 5.7 | 7.2 | 5.4 | 6.8 |
| Batter pH (50/50 water) | 5.7 | 6.2 | 5.5 | 6.1 |

Key: I = isosweet to control; (-) = hyposweet to control

Table V demonstrates the role that citric acid has in the perceived sweetness of solely aspartame and aspartame and fructose sweetened cakes. Cakes utilizing these two types of sweetening systems (aspartame:aspartame/fructose) were baked using a single action leavening system, (comprising citric acid and potassium bicarbonate) and also using a commercially available double action baking powder. The baking powder is a balanced blend of sodium bicarbonate, sodium aluminum sulfate, corn starch, calcium sulfate, calcium acid phosphate and calcium silicate.

As noted, a single action leavening system consists of an acid component and a bicarbonate component which acts as a carbon dioxide source. The two components can be in the free or encapsulated form. In Table V, we used a citric acid/potassium bicarbonate single action leavening system.

Each cake (aspartame/fructose or aspartame sweetened) leavened with the citric acid/potassium bicarbonate single action leavening system was judged to be isosweet relative to the control (cake No. 1, Table II).

The double action baking powder leavened cakes (aspartame/fructose or aspartame sweetened) were identical in all respects to their single action leavened counterparts except for the substitution of a double action leavening system; the double action system does not contain a polycarboxylic acid. The baking powder leavened cakes were judged to be hyposweet relative to the control (No. 1, Table II) and to their single action leavened counterparts.

The cakes of Table V were observed to have acceptable rise and comparable texture and mouthfeel. Yet the perceived sweetness of the double action baking powder leavened cakes was noticeably reduced and they were judged to be hyposweet relative to the control. The results demonstrate that polycarboxylic acids, such as citric acid, play a role in the sweetness synergism observed in aspartame and aspartame/fructose sweetened cakes.

The significant, about two-fold, sweetness synergism which was observed for the single action leavened, isosweet aspartame/fructose sweetened and solely aspartame sweetened cakes of Table V suggest that the polycarboxylic acid imparts a heat stabilizing influence on the aspartame. The presence of the polycarboxylic acid further produces a unique sweetness synergism which compensates for any sweetness which may be lost due to possible breakdown of the aspartame during the baking process. The apparent aspartame sparing effect is also observed for those cakes of Table III which were judged to be hypersweet to the control.

Because the texture of the cakes acidulated by polycarboxylic acids were relatively poor, we explored ways of improving this characteristic within our system. We discovered that, by increasing the egg white solids, we effected a significant increase in cake quality. Table VI sets forth data for cakes sweetened with aspartame/fructose with varying amounts of egg white solids and bulking agents.

## TABLE VI

### Texture Modification
### Aspartame/Fructose Sweetened White Cake

| Constants, each cake, grams: | | |
|---|---|---|
| Aspartame | | 0.40 |
| Crystalline Fructose | | 60.0 |
| High Ratio Bleached Cake Flour | | 195.0 |
| N-Flate | | 38.8 |
| Vanilla Powder | | 2.7 |
| Potassium bicarbonate | | 2.8 |
| Citric Acid | | 2.4 |
| Water | | 370.0 |

| Variables (grams): | 1 | 2 | 3 |
|---|---|---|---|
| Egg White Solids | 20.3 | 25.3 | 30.3 |
| Polydextrose | 80.0 | 77.2 | 74.4 |
| Solka Floc | 63.6 | 61.4 | 59.2 |
| Texture | Poor:crumbles | Good | Good |
| Mouthfeel | Good | Good | Slightly Dry |

Cake No. 2, with egg white solids consisting of 5.44 percent of the dry batter, was judged to have good texture and mouthfeel. In cake No. 3 we increased the amount of egg white solids to 6.51 percent of the dry basis batter. Cake No. 3's texture remained good, but the mouthfeel became slightly dry. The applicable weight ratio of aspartame:egg white solids is about 0.01 to about 0.02 (preferred ratio: 0.016) based on dry weight; the applicable weight ratio of fructose:egg white solids is about 1.8 to 2.6 (preferred ratio: 2.4) based on dry weight.

Table VII sets forth data for cakes sweetened solely with aspartame and having varying amounts of egg white solids and bulking agents.

## TABLE VII

### Texture Modification
### Aspartame Sweetened White Cake

| Constants, each cake, grams: | | |
|---|---|---|
| Aspartame | | 0.85 |
| High Ratio Bleached Cake Flour | | 199.0 |
| N-Flate | | 40.0 |
| Vanilla Powder | | 2.7 |
| Potassium bicarbonate | | 2.8 |
| Citric Acid | | 1.8 |
| Water | | 350.0 |

| Variables (grams): | 1 | 2 |
|---|---|---|
| Egg White Solids | 20.3 | 25.3 |
| Polydextrose | 125.0 | 121.9 |
| Solka Floc | 73.2 | 71.4 |
| Texture | Very poor:crumbles | Improved:slight crumbling |
| Mouthfeel | Gritty | Gritty |

Cake No. 2 with 5.43 percent egg white solids based on the dry batter weight was judged to have improved texture and gritty mouthfeel. The cake was only slightly prone to crumble and was improved over cake No. 1, as well as the other aspartame only cakes set forth in Table IV. Overall, the texture and mouthfeel of the aspartame/fructose sweetened cakes was superior to the aspartame sweetened cakes. We believe this is due to the bulking, flavoring, softening and other characteristics of fructose and the increased amount of bulking agents in the aspartame only sweetened cakes.

Citric acid (a polycarboxylic acid) has three dissociation constants. Our further research involved evaluating other polycarboxylic acids with multiple (two or more) dissociation constants similar to citric acid as components of a single action leavening system in cakes sweetened with aspartame/fructose and aspartame.

Tables VIII and IX set forth data for white cakes sweetened with aspartame/fructose utilizing various acidulants as part of a single action leavening system. In Table VIII the ingredients which are constant in each cake are listed. The amount of sweeteners added (0.40 g aspartame and 60 g crystalline fructose) is the same amount of sweetener used in cake No. 4, Table III, a cake which was judged to be isosweet to the control.

Table IX sets forth the acidulants tested in varying amounts: citric acid, malic acid, adipic acid, fumaric acid, tartaric acid, glutaric acid, malonic acid and succinic acid.

### TABLE VIII

**Constants**

**Acidulant Evaluation**

**Aspartame/Fructose Sweetened White Cakes**

| | grams |
|---|---|
| Aspartame | 0.40 |
| Crystalline Fructose | 60.0 |
| High Ratio Bleached Cake Flour | 195.0 |
| Polydextrose | 77.2 |
| Solka Floc | 61.4 |
| Egg White Solids | 25.3 |
| Vanilla Powder | 2.7 |
| Potassium Bicarbonate | 2.8 |
| N-Flate | 38.8 |
| Water | 370.0 |

### TABLE IX

**Variables**
**Acidulant Evaluation**
**Aspartame/Fructose Sweetened White Cake**

| | Citric | | | | Malic | | Adipic | | Fumaric | | Tartaric | | Glutaric | | Malonic | | Succinic | |
|---|---|---|---|---|---|---|---|---|---|---|---|---|---|---|---|---|---|---|
| | 1.2 | 1.5 | 1.8 | 2.4 | 1.8 | 2.4 | 1.8 | 2.4 | 1.8 | 2.4 | 1.8 | 2.4 | 1.8 | 2.4 | 1.8 | 0.5 | 1.8 | 0.5 |
| Batter pH, as is | 6.1 | 5.9 | 5.7 | 5.2 | 5.6 | 5.2 | 6.0 | 5.4 | 5.8 | 5.7 | 5.8 | 5.5 | 5.6 | 5.4 | 5.4 | 7.4 | 6.1 | 7.2 |
| Baked pH (50/50 water) | 6.2 | 6.0 | 5.8 | 5.3 | 5.6 | 5.3 | 5.8 | 5.6 | 5.4 | 5.1 | 5.9 | 5.7 | 5.6 | 5.4 | 5.4 | 7.1 | 5.5 | 6.7 |
| Rise, inches | 1.8 | 1.8 | 1.8 | 1.8 | 1.8 | 1.6 | 1.9 | 1.8 | 1.8 | 1.9 | 2.0 | 2.0 | 1.6 | 1.8 | 2.0 | 1.9 | 1.8 | 1.8 |
| Texture | A | A | A | A | A | A | A | SCR | A | A | A | A | A | A | A | D | A | A |
| Mouthfeel | A | A | A | SGU | A | SGR | A | A | A | A | A | SGR | A | A | A | A | SGU | A |
| Perceived Relative Sweetness | (-) | I(-) | I | I | I | I | I | I | I | I | I | I | I | I | (-) | (-) | (-) | (-) |
| Taste | A | A | A | SS | A | A | A | A | A | MBA | A | A | A | A | VS | P | VBA | VBA |

Key: A = acceptable; I = isosweet to control; (-) = hyposweet to control; SGU = slightly gummy mouthfeel; SGR = slighty gritty mouthfeel; SCR = slightly crumbly texture; D = dense texture; MBA = moderate bitter aftertaste; VS = very sour acid taste; SS = slight sour acid aftertaste; P = poor taste; VBA = very bitter aftertaste

0 259 996

Table IX demonstrates that using citric acid in levels between about 0.30 percent and about 0.52 percent (based on dry basis batter weight) resulted in cakes with acceptable rise, texture, mouthfeel, perceived sweetness and taste. A slightly sour taste and slightly gummy mouthfeel were observed at the 0.52 percent level. With respect to isosweetness, the applicable weight ratio of aspartame:citric acid is between about 0.14 to about 0.35 based on dry weights, with a preferred ratio of about 0.22 to about 0.27. We expect the other polycarboxylic acids tested to be effective within this same range.

We evaluated malic, adipic, fumaric, tartaric and glutaric acids at two levels: 0.39 percent and 0.52 percent (based on dry basis batter weight). At these levels the cakes were judged to be isosweet to the control (cake No. 1, Table II). This data demonstrates that the same sweetness synergism and apparent aspartame sparing which exists in aspartame/fructose sweetened cakes leavened with critic acid, also exists in aspartame/fructose sweetened cakes leavened with malic, adipic, fumaric, tartaric and glutaric acids.

Malonic and succinic acid were tested at the 0.39 percent and 0.1 percent levels. At both levels, the cakes acidulated with malonic and succinic acid exhibited poor sweetness (hyposweet relative to control) and taste properties.

Tables X and XI set forth data relating to the use of different polycarboxylic acids as acidulants in cakes sweetened solely with aspartame. Table X sets forth the constant ingredients for each cake. The amount of aspartame used (0.9 grams) will produce a cake with an Apparent Total Sweetness Index of 180. In Table XI, the variables - the type and amount of acidulant - are listed. Each polycarboxylic acid was evaluated at the 0.39 percent and 0.51 percent levels (based on percentage of a dry batter basis).

The perceived relative sweetness of each cake was judged to be isosweet to the control (cake No. 1, Table II). In the case of citric acid, the cakes were judged to be isosweet to hypersweet to the control. In the case of fumaric acid, the cakes were judged to be isosweet to hyposweet to the control. This perceived isosweetness demonstrates that the polycarboxylic acids tested also contribute to sweetness synergism and apparent aspartame sparing in a solely aspartame sweetened cake. The applicable ratio of aspartame:polycarboxylic acid is about 0.3 to about 0.6.

Although the polycarboxylic organic acid acidulated/aspartame sweetened cakes were observed to have acceptable rise and judged to be isosweet relative to the control, the overall eating quality of those cakes was poor. This is probably due to the high volume of bulking agents which are necessary to replace the fructose used in the aspartame/fructose sweetened cakes.

## TABLE X

Constants
Acidulant Evaluation:
Aspartame Sweetened White Cakes

| | |
|---|---|
| Aspartame | 0.90 |
| High Ratio Bleached Cake Flour | 199.0 |
| Polydextrose | 121.9 |
| Solka Floc | 71.4 |
| Egg White Solids | 25.3 |
| Vanilla Powder | 2.7 |
| Potassium Bicarbonate | 2.8 |
| N-Flate | 40.0 |
| Water | 380.0 |

## TABLE XI

Variables
Acidulant Evaluation:
Aspartame Sweetened White Cake

| | Acidulant, grams | | | | | | | | | | | |
|---|---|---|---|---|---|---|---|---|---|---|---|---|
| | Citric | | Malic | | Adipic | | Fumaric | | Tartaric | | Glutaric | |
| | 1.8 | 2.4 | 1.8 | 2.4 | 1.8 | 2.4 | 1.8 | 2.4 | 1.8 | 2.4 | 1.8 | 2.4 |
| Batter pH, as is | 5.4 | 5.0 | 5.3 | 5.1 | 5.6 | 5.3 | 5.7 | 5.3 | 5.4 | 5.0 | 5.4 | 5.2 |
| Baked pH (50/50 water) | 5.5 | 5.1 | 5.4 | 5.2 | 5.7 | 5.3 | 5.2 | 4.8 | 5.5 | 5.1 | 5.6 | 5.2 |
| Rise, inches | 1.9 | 1.8 | 1.8 | 1.8 | 1.9 | 1.8 | 1.9 | 1.8 | 1.8 | 1.8 | 1.8 | 1.8 |
| Texture | SCR | SCR | CR | CR | SCR | SCR | SCR | SCR | SCR | CR | SCR | SCR |
| Mouthfeel | SGR | SGR | GR | GR | SGR | GR | GR | GR | SGR | GR | SGR | SGR |
| Perceived Relative Sweetness | I(+) | I(+) | I | I | I | I | I(-) | I(-) | I | I | I | I |
| Taste | SBA | SBA | SBA | SBA | A | SS | SBA | MBA | A | A | A | A |

Key: A = acceptable; I = isosweet to control; (+) = hypersweet to control; (-) = hyposweet to control; SCR = slightly crumbly texture; CR = crumbly texture; SGR = slightly gritty mouthfeel; G = gritty mouthfeel; A = aftertaste; SS = slight sour acid aftertaste; SBA = slight bitter aftertaste; MBA = moderate bitter aftertaste

The enhanced sweetener, aspartame sparing compositions described above - utilized in dietetic cakes - are also applicable to other food products.

## TABLE XII

Fructose/Aspart. me Sweetened
Reduced Calorie Lemon Cookie

| | Single Action | Double Action |
|---|---|---|
| | *grams* | |
| Aspartame | 0.13 | 0.13 |
| Crystalline Fructose | 69.0 | 69.0 |
| General Purpose Flour | 84.9 | 84.9 |
| Polydextrose | 61.3 | 61.3 |
| Solka Floc | 37.1 | 37.1 |
| Vegetable Shortening | 26.0 | 26.0 |
| N-Flate | 18.0 | 18.0 |
| Egg White Solids | 13.0 | 13.0 |
| Lemon Extract | 1.5 | 1.5 |
| Vanilla Powder | 1.5 | 1.5 |
| Potassium Bicarbonate | 1.8 | ---- |
| Tartaric Acid | 1.6 | ---- |
| Double Action Baking Powder | ---- | 5.0 |
| Water | 95.0 | 95.0 |
| | | |
| Baked pH (50/50 water) | 5.1 | 5.9 |
| | | |
| Texture | slightly dense | slightly dense |
| Rise | acceptable | acceptable |
| Perceived Sweetness | acceptable | poor-hyposweet |
| Taste | acceptable | poor |

Directions: Combine aspartame, pure crystalline fructose, polydextrose, Solka-Floc, N-Flate, shortening and egg white solids. Beat at moderate speed to a cream-like texture. Add leavening agents, vanilla powder, lemon extract and water. Creat until ingredients are blended and wetted. Gently fold in flour. Roll out dough to about 1/4-inch thickness. Cut cookies to about a 2-inch diameter and bake on cookie sheets at 350° for about 5 to 6 minutes.

For example, Table XII sets forth the applicability of the present invention to a lemon flavored cookie. Table XII compares data developed for a reduced calorie lemon cookie sweetened with aspartame and fructose. The single action leavening system cookie was acidulated with tartaric acid. The double action baking powder cookie was leavened with commercial baking powder as described earlier.

We prepared both cookies identically by combining aspartame, pure crystalline fructose, polydextrose, Solka Floc, N-flate, shortening and egg white solids. We beat this mixture at a moderate speed until a cream-like texture resulted. The leavening agents, vanilla powder, lemon extract and water were added. The ingredients were creamed until blended and wetted thoroughly. Flour was then gently folded in. The resulting dough was then rolled to about 1/4 inches thickness and from it we cut cookies approximately two inches in diameter which we baked on cookie sheets at 350°F. for 5 to 6 minutes.

Organoleptic tests indicated that the cookie leavened with the single action system was superior to the cookie leavened with a double action system. The single action leavened cookie exhibited acceptable taste, sweetness and rise, with slightly dense texture. The double action baking powder cookie had poor taste and was judged hyposweet. The pH of the baked cookies (50/50 water) was noted to be 5.1 and 5.9 respectively for the single action and double action baking powder cookies.

This data shows that in baked products, the composition consisting of a dipeptide sweetener (aspartame) a polyhydric alcohol (fructose) and a polycarboxylic acid with two or more dissociation constants (tartaric acid) results in a sweetener enhanced sweetening system in which there is an apparent heat sparing of the aspartame and compensation for that aspartame lost during baking. The aspartame sweetener enhancement and aspartame sparing are not, therefore, limited to cake-like baked products.

Although the foregoing research discloses the use of fructose in combination with aspartame as the sweetening system for baked products, the use of other physiologically acceptable polyhydric alcohols in lieu of fructose is possible. The use of other polyhydric alcohols such as sucrose, dextrose, xylitol, etc. as an element of the sweetening system in combination with aspartame will be acceptable in most contexts and will not adversely affect the previously noted sweetness synergism and sparing effects of aspartame in combination with polycarboxylic acids.

## TABLE XIII

### Fructose/Aspartame vs. Sucrose/Aspartame
### Sweetened White Cakes

| | grams | | |
|---|---|---|---|
| | Fructose, Cake 1 | Sucrose, Cake 2 | Sucrose, Cake 3 |
| Aspartame | 0.40 | 0.40 | 0.50 |
| Crystalline Fructose | 60.0 | ----- | ----- |
| Sucrose | ---- | 60.0 | 70.0 |
| High Ratio Bleached Cake Flour | 195.0 | 195.0 | 195.0 |
| Polydextrose | 77.2 | 77.2 | 71.6 |
| Solka Floc | 61.4 | 61.4 | 57.0 |
| N-Flate | 38.8 | 38.8 | 38.8 |
| Egg White Solids | 25.3 | 25.3 | 25.3 |
| Vanilla Powder | 2.7 | 2.7 | 2.7 |
| Potassium Bicarbonate | 2.8 | 2.8 | 2.8 |
| Citric Acid | 1.8 | 1.8 | 1.8 |
| Water | 370.0 | 370.0 | 370.0 |
| | | | |
| Batter pH, as is | 5.7 | 5.7 | 5.8 |
| Baked pH (50/50 water) | 5.9 | 5.3 | 6.0 |
| | | | |
| Rise, inches | 1.8 | 1.5 | 1.7 |
| Texture | acceptable | acceptable | acceptable |
| Mouthfeel | acceptable | acceptable | acceptable |
| Crust Color | lt. golden brown | almost white | almost white |
| Perceived Relative Sweetness | isosweet | hyposweet | hyposweet |
| Taste | acceptable | flavor less acceptable | flavor less acceptable |

Cake No. 2 in Table XIII contains an aspartame/sucrose sweetening system. We prepared and evaluated Cake No. 2 organoleptically to determine the effects of using sucrose in place of fructose as the polyhydric alcohol sweetener in combination with aspartame. Each cake was observed to have similar rise and texture, but the cake containing sucrose was judged to be noticeably less sweet (hyposweet) compared to the cake containing fructose. Although neither cake exhibited an unpleasant aftertaste, the fructose cake had the preferred flavor.

The superior sweetness of the fructose cake could be attributed to a number of factors. While the fructose and sucrose cakes contain equivalent amounts of sweetener, their Apparent Total Sweetness Indices differ. The Index of the fructose cake is about 170. The Index of the sucrose cake is about 140 owing to the sucrose sweetness equivalent of 1.0. Further, fructose may contribute more to the synergistic effect noted previously.

Cake No. 3 of Table XIII discloses a sucrose/aspartame sweetened cake in which the sucrose and aspartame levels have been increased (70 and 0.5 grams respectively) and the commercial bulking agents have been reduced proportionately. This cake, with an Apparent Total Sweetness Index of about 170, had acceptable rise and texture. Cake No. 3 was, however, judged to be still hyposweet when compared to the fructose cake. Cake No. 3 was, however, observed to be sweeter than cake No. 2. The flavor of the sucrose cake was, again, not as acceptable as the fructose cake. The preferred flavor of the fructose cake may be the result of the known ability of fructose to enhance certain flavors.

These observations do not, however, mean that sucrose or other polyhydric alcohols (such as sorbitol or xylitol) could not be used in combination with aspartame as the sweetening system for baked products acidulated with a polycarboxylic acid, in which about 50% of the sweetener is derived from aspartame. The hyposweetness noted in Cake Nos. 2 and 3, Table XIII can be eliminated, for example, by additional increase in the aspartame or sucrose levels. Although products sweetened with aspartame and polyhydric alcohols such as sucrose, or the like, may have acceptable sweetness levels and other qualities, these products would not have the same advantages from a calorie reduction and metabolic perspective as those products utilizing fructose.

Sweetening agents, such as sucrose, fructose, xylitol and dipeptide compositions have, as discussed herein, different relative sweetness. In a baked product acidulated with a polycarboxylic acid, the weight ratios of polycarboxylic acid:sweetener will vary depending on the relative sweetness of the sweetener. Similarly, in the instant invention, where a polyhydric alcohol and dipeptide sweetener are present, the weight ratio of these components will also vary depending on the relative sweetness of the components.

The foregoing general discussion and experimental examples are intended to be illustrative of the present invention, and are not to be considered as limiting. Other variations within the scope of this invention, as indicated by the following claims, are possible and will present themselves to those skilled in the art.

14

## Claims

1. A sweetening composition which comprises a dipeptide sweetener together with a sweetness enhancing admixture of a physiologically acceptable polycarboxylic acid having at least two dissociation constants that have a pKa value of less than about 5.5 and a physiologically acceptable polyhydric alcohol.

2. A sweetening composition as claimed in claim 1 wherein the polycarboxylic acid is a hydroxypolycarboxylic acid.

3. A sweetening composition as claimed in claim 2 wherein the hydroxypolycarboxylic acid is hydroxydicarboxylic acid.

4. A sweetening composition as claimed in claim 2 wherein the hydroxypolycarboxylic acid is a hydroxytricarboxylic acid.

5. A sweetening composition as claimed in claim 1 wherein the polycarboxylic acid is an aliphatic polycarboxylic acid.

6. A sweetening composition as claimed in claim 5 wherein the aliphatic polycarboxylic acid is an unsaturated aliphatic dicarboxylic acid.

7. A sweetening composition as claimed in claim 5 wherein the aliphatic polycarboxylic acid is a saturated aliphatic dicarboxylic acid containing four carbon atoms or more.

8. A sweetening composition as claimed in claim 1 wherein the polycarboxylic acid comprises citric acid, malic acid, adipic acid, fumaric acid, tartaric acid or glutaric acid.

9. A sweetening composition as claimed in any preceding claim wherein the weight ratio of dipeptide sweetener:polycarboxylic acid is about 0.14 to about 0.35 based on dry weight and the weight ratio of dipeptide sweetener:polyhydric alcohol is about 0.006 to about 0.008 based on dry weight.

10. A sweetening composition as claimed in any one of claims 1-8 wherein the weight ratio of dipeptide sweetener:polycarboxylic acid is about 0.22 to about 0.27 and the weight ratio of dipeptide sweetener:polyhydric alcohol is about 0.007.

11. A sweetening composition as claimed in any one of claims 1-8 wherein the weight ratio of the polycarboxylic acid to the polyhydric alcohol is about 0.016 to about 0.04.

12. A sweetening composition as claimed in any one of claims 1-8 wherein the weight ratio of polycarboxylic acid to polyhydric alcohol is about 0.03.

13. A sweetening composition as claimed in any preceding claim wherein the dipeptide sweetener is an aspartyl phenylalanine alkyl ester containing up to four carbon atoms, inclusive, in the alkyl moiety thereof.

14. A sweetening composition as claimed in claim 13 wherein the dipeptide sweetener is aspartame.

15. A sweetening composition as claimed in any preceding claim wherein the polyhydric alcohol is fructose.

16. A sweetening composition as claimed in any preceding claim wherein the polyhydric alcohol has a relative sweetness as compared to sucrose of at least about 0.3.

17. A food product mix comprising:
a sweetening composition as claimed in any preceding claim,
flour;
a bulking agent; and
a single action leavening system consisting of an alkaline bicarbonate component and the polycarboxylic acid of the sweetening composition as an acidulant component.

18. A food product mix as claimed in claim 17 wherein the resulting food product has low sodium and low cholesterol levels.

19. A food product mix comprising:
flour;
a single action leavening system consisting of an alkaline bicarbonate component and a physiologically acceptable polycarboxylic acid having at least two dissociation constants that have a pKa value of less than about 5.5 as an acidulant component;
a bulking agent;
a dipeptide sweetener; and
egg white solids.

20. A food product mix as claimed in claim 19 wherein the dipeptide sweetener is aspartame, and the polycarboxylic acid comprises citric acid, malic acid, adipic acid, fumaric acid, tartaric acid or glutaric acid.

21. A food product mix as claimed in claim 17, 18, 19 or 20 wherein one or both components of the single action leavening system are encapsulated.

22. A method for imparting heat stability to a dipeptide sweetener which comprises combining an effective amount of a physiologically acceptable polyhydric alcohol together with a physiologically acceptable polycarboxylic acid having at least two dissociation constants that have a pKa value of less than about 5.5.

23. A method as claimed in claim 228 wherein the dipeptide sweetener is aspartame, the polhydric alcohol is fructose, and the polycarboxylic acid is either a hydroxycarboxylic acid or an aliphatic dicarboxylic acid.

24. A method as claimed in claim 23 wherein the polycarboxylic acid comprises citric acid, malic acid, adipic acid, fumaric acid, tartaric acid or glutaric acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 134 322 (NABISCO)<br><br>* Claims 1,3,4,7-9,13,15-21,23; examples 1,2; page 12, lines 2-13 *<br><br>--- | 1-9,13 -18,20 -23 | A 23 L 1/236 |
| X | EP-A-0 100 002 (SEARLE)<br><br>* Claims 1-12; example 3 *<br><br>--- | 1-9,13 -23 | |
| X | OA-A- 6 924 (GENERAL FOODS)<br><br>* Claims 1-10 *<br><br>----- | 1-9,13 ,22-24 | |

**TECHNICAL FIELDS SEARCHED (Int. Cl.4)**

A 23 L

The present search report has been drawn up for all claims

| Place of search | Date of completion of the search | Examiner |
|---|---|---|
| THE HAGUE | 19-10-1987 | VAN MOER A.M.J. |